(19) Europäisches Patentamt
European Patent Office
Office européen des brevets

(11) **EP 1 974 194 B1**

(12) **FASCICULE DE BREVET EUROPEEN**

(45) Date de publication et mention de la délivrance du brevet:
**27.02.2013 Bulletin 2013/09**

(21) Numéro de dépôt: **07718069.3**

(22) Date de dépôt: **16.01.2007**

(51) Int Cl.:
***G01J 9/02*** (2006.01)

(86) Numéro de dépôt international:
**PCT/FR2007/050656**

(87) Numéro de publication internationale:
**WO 2007/083061 (26.07.2007 Gazette 2007/30)**

(54) **INTERFEROMETRE OPTIQUE ACHROMATIQUE ET COMPACT, DU TYPE A DECALAGE TRILATERAL**

FARBLOSES UND KOMPAKTES OPTISCHES DREISEITIGES VERSCHIEBUNGSINTERFEROMETER

ACHROMATIC AND COMPACT OPTICAL INTERFEROMETER OF THE TRILATERAL SHIFT TYPE

(84) Etats contractants désignés:
**DE FR GB**

(30) Priorité: **20.01.2006 FR 0600526**

(43) Date de publication de la demande:
**01.10.2008 Bulletin 2008/40**

(73) Titulaire: **ONERA (Office National d'Etudes et de Recherches Aérospatiales)**
**92320 Châtillon (FR)**

(72) Inventeurs:
• **PRIMOT, Jérôme**
**F-92320 Châtillon (FR)**
• **GUERINEAU, Nicolas**
**F-92160 Antony (FR)**
• **VELGHE, Sabrina**
**F-91140 Villebon-sur-yvette (FR)**

(74) Mandataire: **Lapoux, Roland et al**
**Gevers France**
**41, avenue de Friedland**
**75008 Paris (FR)**

(56) Documents cités:
**FR-A- 2 712 978    FR-A- 2 795 175**

• **PRIMOT J ET AL: "WAVEFRONT SENSOR PROTOTYPE FOR INDUSTRIAL APPLICATIONS BASED ON A THREE-LEVEL PHASE GRATING" OPTICAL ENGINEERING, SOC. OF PHOTO-OPTICAL INSTRUMENTATION ENGINEERS. BELLINGHAM, US, vol. 36, no. 3, mars 1997 (1997-03), pages 901-903, XP000690882 ISSN: 0091-3286**

**Description**

L'invention est destinée à l'analyse de la surface d'onde d'un faisceau de lumière.

Ce type d'analyse permet le contrôle des éléments optiques, la qualification des appareils optiques, ainsi que le pilotage des éléments optiques déformables utilisés dans les optiques actives ou adaptatives. Il permet aussi l'étude de phénomènes physiques non directement mesurables, tels que les variations d'indice optique au sein de milieux turbulents que l'on peut rencontrer à la traversée de l'atmosphère terrestre, ou bien dans une veine de soufflerie. Il est aussi utilisé pour le contrôle de la planéité de composants électroniques, par exemple des plans focaux matriciels, ainsi que pour la mise en forme de faisceaux laser de puissance.

Le type d'analyse de surface d'onde selon l'invention est basé sur l'utilisation d'un réseau de diffraction positionné sur le trajet du faisceau à analyser.

Pour la bonne compréhension de ce qui va suivre, un tel réseau est défini comme étant un dispositif optique introduisant des variations périodiques de phase, d'intensité, ou de phase et d'intensité. Tout réseau de diffraction est ainsi caractérisé par la multiplication de deux fonctions : l'une, appelée fonction de phase, traduit les variations périodiques de phase introduites par le réseau et l'autre appelée fonction d'intensité traduit les variations périodiques d'intensité introduites par le réseau.

Conformément à son brevet d'invention FR 2 712 978, le demandeur rappelle le mode de constitution et la définition d'un réseau bidimensionnel. Un ensemble de points disposés régulièrement suivant deux directions constitue un maillage plan. Ces points définissent une maille élémentaire. La maille élémentaire est la plus petite surface permettant de réaliser un pavage non lacunaire du plan selon les deux directions qui le définissent. Le polygone de la maille élémentaire est le polygone de surface minimale dont les côtés sont supportés par les médiatrices des segments reliant un point quelconque de l'ensemble à ses plus proches voisins. Un réseau bidimensionnel est la répétition à volonté d'un motif élémentaire disposé selon un maillage plan. Un maillage plan peut définir des mailles élémentaires hexagonales ou rectangulaires (les mailles carrées n'étant qu'un cas particulier de ces dernières).

Lorsqu'on éclaire un réseau de diffraction avec un faisceau de lumière, appelé faisceau incident, les faisceaux de lumière diffractés par le réseau, appelés faisceaux émergents, peuvent être décrits selon deux approches équivalentes.

La première approche consiste à considérer les faisceaux émergents comme des répliques du faisceau incident. Ils sont appelés sous-faisceaux, chacun correspondant à un ordre de diffraction du réseau. Parmi ces sous-faisceaux, deux catégories peuvent être distinguées. Tout d'abord, on distingue les sous-faisceaux dits principaux correspondants aux ordres diffractés qui seront utilisés selon l'invention. Les autres ordres, qui ne sont pas utiles à l'analyse, seront appelés sous-faisceaux secondaires. Le réseau sera donc défini de manière à favoriser l'émergence des sous-faisceaux principaux et à minimiser la présence des sous-faisceaux secondaires.

La seconde approche consiste à considérer les faisceaux émergents comme des faisceaux diffractés par chaque maille du réseau. Ils sont appelés faisceaux secondaires.

Quand une fonction d'intensité est introduite par un réseau, chaque faisceau secondaire est issu d'une maille du réseau d'intensité appelée sous-pupille.

Dans son brevet d'invention FR 2 712 978 déjà mentionné, le demandeur a décrit un interféromètre à décalage tri-latéral mettant en oeuvre un réseau bidimensionnel de phase et/ou d'intensité et un système de filtrage spatial. D'après l'approche par décomposition en sous-faisceaux, le réseau subdivise optiquement, dans un plan conjugué du défaut, le faisceau incident à analyser en plusieurs sous-faisceaux. Un système de filtrage spatial des sous-faisceaux vient sélectionner les trois sous-faisceaux principaux utilisés pour l'analyse. Un traitement optique particulier des trois sous-faisceaux ainsi obtenus permet d'observer un interférogramme constitué par un maillage hexagonal de taches lumineuses dont le contraste est invariant, quel que soit le plan d'observation retenu. Cet interférogramme est sensible aux gradients de la surface d'onde, et ce avec une possibilité d'ajustement continu de la dynamique et de la sensibilité. La distance d'observation y est définie comme la distance séparant le plan d'observation retenu du plan dit de sensibilité nulle, ce dernier étant un plan conjugué du plan du réseau situé en aval du filtrage spatial. Ce type d'interféromètre a l'avantage de présenter des qualités métrologiques importantes du fait de la pureté fréquentielle de l'intérférogramme généré. De plus, l'erreur de la mesure peut-être estimée à partir de la mesure elle-même. Enfin, cet interféromètre peut fonctionner en lumière polychromatique, sous réserve que la différence de marche du défaut à détecter ne dépende pas de la longueur d'onde.

Par contre, il est complexe à mettre en oeuvre, du fait de l'insertion du système de filtrage spatial pour sélectionner les sous-faisceaux principaux entre le réseau et le plan d'observation du système de franges d'interférence. De plus, le système de filtrage spatial apporte des limitations pour la mesure de faisceaux lumineux fortement perturbés ou de très grande largeur spectrale.

Dans son brevet d'invention FR 2 795 175, le demandeur décrit un interféromètre à décalage quadri-latéral qui est une évolution de l'interféromètre à décalage tri-latéral décrit ci-dessus. Le réseau à la base de cet interféromètre subdivise optiquement, dans un plan conjugué du défaut, le faisceau incident à analyser en quatre sous-faisceaux principaux, utiles à l'analyse. Les sous-faisceaux secondaires étant minoritaires et de faible amplitude, leur élimination par un système de filtrage spatial n'est pas nécessaire. L'interférogramme est constitué par un maillage rectangulaire de taches lumineuses dont le contraste est invariant, quel que soit le plan d'observation retenu. Comme l'interféromètre à décalage tri-latéral, cet interféromètre peut fonctionner en lumière polychromatique et bénéficie d'une sensibilité et d'une dynamique continûment réglable par simple translation du plan d'observation par rapport au plan dit de sensibilité nulle. De plus, contrairement à l'interféromètre à décalage tri-latéral, l'absence de système de filtrage spatial permet une grande facilité de mise en oeuvre et permet de mesurer des faisceaux lumineux fortement perturbés ou de très grande largeur spectrale. L'estimation de l'erreur est également possible avec cet interféromètre, cependant elle sera moins robuste dans le cas de la mesure de défaut de haute dynamique. De plus, la géométrie d'échantillonnage des surfaces d'onde à analyser de l'interféromètre à décalage quadri-latéral est moins optimale que celle obtenue avec un interféromètre à décalage tri-latéral.

Il paraît donc vivement souhaitable de disposer d'un interféromètre combinant, d'une part, la simplicité de mise en oeuvre et la capacité de fonctionnement, à partir de sources lumineuses de faible intensité fortement perturbées ou de très grande largeur spectrale de l'interféromètre à décalage quadri-latéral et, d'autre part, la possibilité d'estimer l'erreur de la mesure de manière robuste et la géométrie optimale de l'échantillonnage des surfaces d'onde à analyser de l'interféromètre à décalage tri-latéral.

La présente invention a pour but d'apporter un progrès en ce sens.

L'invention peut être considérée sous forme de procédé ou de dispositif.

Le procédé proposé est divulgué dans la revendication 1.

Ce grâce à quoi le réseau de diffraction réalisant la multiplication des deux fonctions ainsi définies diffracte un maillage hexagonal de faisceaux secondaires qui se propagent et interfèrent entre eux de manière à générer, en tout plan d'observation parallèle au plan du réseau, une image se présentant sous la forme d'un maillage hexagonal de taches lumineuses dont le contraste est sensiblement indépendant de la longueur d'onde ainsi que de la distance d'observation.

Dans l'approche consistant à considérer les faisceaux émergents comme des répliques du faisceau incident, la fonction de phase diffracte plusieurs sous-faisceaux dont les trois sous-faisceaux principaux et des sous-faisceaux secondaires. La multiplication par une fonction d'intensité permet de minimiser l'énergie diffractée dans les sous-faisceaux secondaires afin qu'il ne reste majoritairement que les trois sous-faisceaux principaux, utiles à l'analyse.

Le maillage hexagonal de taches lumineuses est observable dans le plan du réseau, plan de sensibilité nulle. Le maillage est avantageusement observé dans un plan situé à une distance d'observation choisie par l'utilisateur en, fonction des gradients de la surface d'onde à analyser et de la dynamique désirée.

Ce procédé fonctionne en lumière polychromatique et, en ajustant la distance d'observation, permet, par un réglage continu de la sensibilité et de la dynamique de l'appareil, la mesure de faisceaux lumineux fortement perturbés.

L'utilisateur dispose ainsi de la souplesse de réglage continu en dynamique de l'interféromètre à décalage tri-latéral sans les contraintes de mise en oeuvre liées à l'insertion du système de filtrage spatial.

L'invention couvre également les dispositifs susceptibles de permettre la mise en oeuvre du procédé proposé. Un tel dispositif est divulgué dans la revendication 2.

Un réseau bidimensionnel d'intensité préférentiel selon l'invention a un motif élémentaire d'intensité hexagonale dont la surface en transmission est voisine de 66% de la surface de la maille élémentaire d'intensité.

D'autres caractéristiques et avantages de l'invention apparaîtront à l'examen de la description détaillée ci-après et des dessins annexés, sur lesquels :

- la figure 1A est le schéma optique de principe d'un dispositif permettant la mise en oeuvre de l'invention pour le contrôle d'éléments optiques ;

- la figure 1B est le schéma optique de principe d'un dispositif permettant la mise en oeuvre de l'invention pour la mesure de milieux turbulents comme l'atmosphère terrestre que traverse un faisceau issu d'une source polychromatique comme une étoile ;

- la figure 2A illustre un réseau bidimensionnel Gİ à maillage hexagonal de surface S.

- la figure 2B illustre un réseau bidimensionnel GP à maillage hexagonal de surface 3S.

- la figure 2C illustre le positionnement relatif des mailles élémentaires d'intensité MEİ et des mailles élémentaires de phase MEP selon l'invention.

- la figure 3A illustre un premier exemple de motif élémentaire de réseau d'intensité utilisable dans l'invention.

- la figure 3B illustre un deuxième exemple de motif élémentaire de réseau d'intensité utilisable dans l'invention.

- la figure 4A illustre un exemple de réseau de phase à maillage hexagonal utilisable dans l'invention.

- la figure 4B indique la position relative de la maille élémentaire de phase et le motif de phase correspondant.

- la figure 5A illustre un premier exemple de réseau de diffraction GR, conforme à l'invention.

- la figure 5B illustre un deuxième exemple de réseau de diffraction GR, conforme à l'invention.

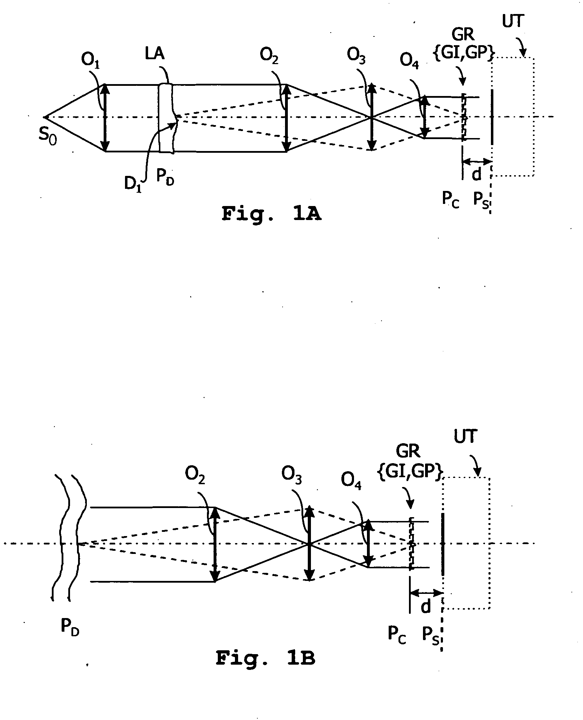

Les figures 1 présentent deux exemples de dispositifs permettant la mise en oeuvre de l'invention.

Sur la figure 1A, une source $S_0$ de lumière polychromatique est placée au foyer d'une lentille collimatrice $O_1$. Le faisceau de lumière parallèle issu de la lentille $O_1$ illumine un échantillon à tester, qui est représenté schématiquement comme une lame à faces parallèles LA, placé dans le plan $P_D$, et présentant un défaut de planéité $D_1$. L'échantillon peut être tout autre système optique (une lentille ou un miroir, en particulier un miroir de télescope), ou même simplement une zone d'un milieu gazeux qui serait perturbé par un écoulement par exemple.

Dans le cas d'une application en astronomie, un dispositif permettant de mettre en oeuvre l'invention est illustré par la figure 1B. Une onde plane issue d'une source très éloignée comme une étoile par exemple traverse un milieu turbulent dont les variations d'indice sont représentées par des traits sinueux.

Un montage d'entrée réalise l'adaptation optique permettant de mettre en oeuvre le procédé selon l'invention.

Cette adaptation est réalisée de préférence par un système afocal constitué de deux lentilles $O_2$ et $O_4$, avec en position intermédiaire une lentille de champ $O_3$. Ce système afocal a pour fonction d'une part, d'adapter le diamètre du faisceau, analysé dans le plan $P_D$, aux dimensions du réseau bidimensionnel situé dans un plan $P_C$, et, d'autre part, de conjuguer optiquement le plan $P_D$ où se situe le défaut à analyser avec le plan $P_C$.

D'autres moyens réalisant cette conjugaison optique entre ces deux plans peuvent convenir.

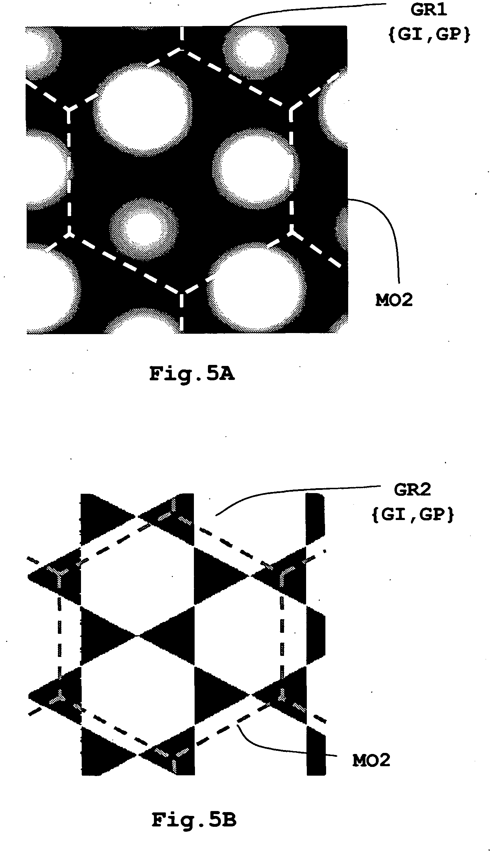

Dans le plan d'analyse $P_C$, on place un réseau de diffraction GR apte à réaliser la combinaison des fonctions d'intensité et de phase. Matériellement, ce réseau peut être constitué, comme par exemple ceux des figures 5A ou 5B. C'est la combinaison particulière des fonctions qui caractérise le réseau de l'invention et non un mode de réalisation particulier.

Dans l'exemple de réalisation présenté, le réseau de diffraction GR est constitué d'un réseau bidimensionnel d'intensité GI et un réseau bidimensionnel de phase GP.

Le réseau d'intensité GI réalise une fonction d'intensité FÌ qui définit un maillage hexagonal de sous-pupilles transmettant la lumière du faisceau à analyser en plusieurs faisceaux secondaires.

Le réseau de phase GP réalise une fonction de phase FP qui introduit, entre deux faisceaux secondaires adjacents, un déphasage moyen voisin de $2\pi/3$ (modulo $2\pi$).

L'ordre dans lequel sont réalisées ces deux fonctions dans le plan est sans importance.

Selon l'invention, l'interférogramme est constitué par un maillage hexagonal de taches.

Le plan $P_c$ est un plan de sensibilité nulle.

L'observation est effectuée dans un plan $P_s$, situé à distance d'observation choisie d du plan $P_C$.

La dynamique et la sensibilité du dispositif varient selon la distance d'observation. Ainsi, lorsque d est nulle, le plan d'observation $P_s$ est confondu avec le plan d'analyse $P_c$ où est situé le réseau et la sensibilité est nulle.

En général, un moyen complémentaire d'observation du plan $P_s$, constitué par exemple d'une lentille qui réalise une conjugaison optique entre le plan $P_s$ et un plan de travail plus accessible peut être utilisé.

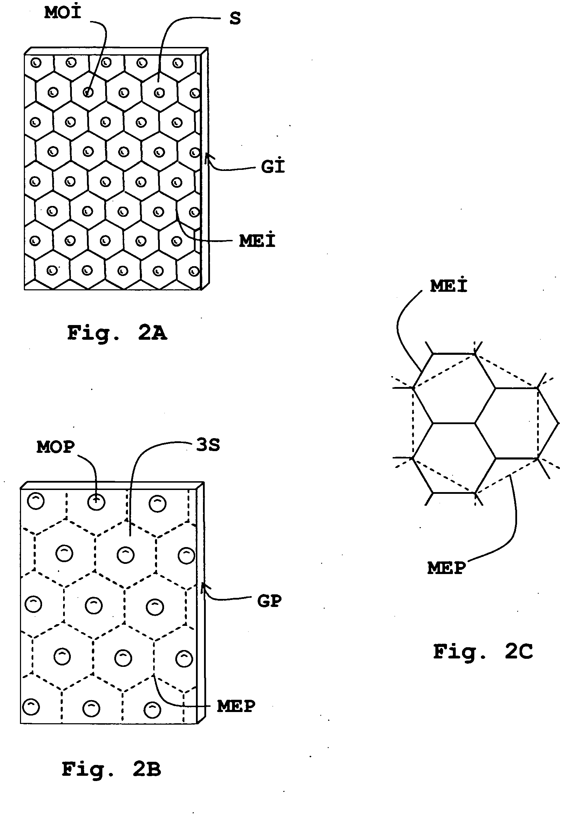

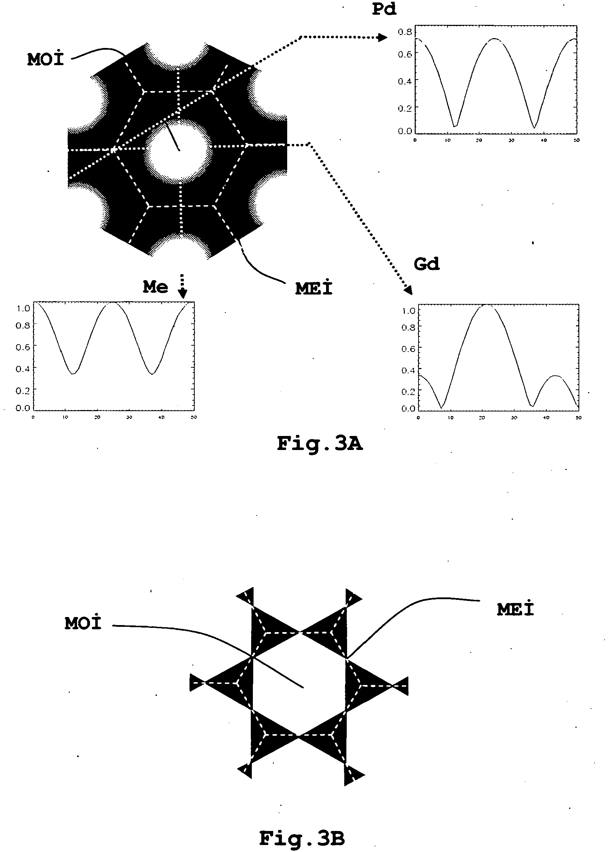

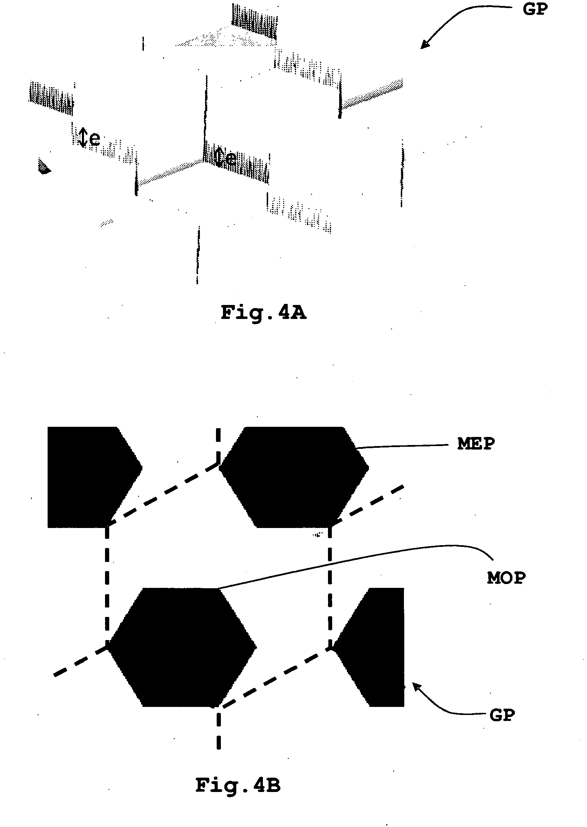

Les figures 2 présentent les mailles élémentaires des réseaux bidimensionnels, les motifs qui y sont représentés le sont à titre illustratif. Les motifs de l'invention sont présentés aux figures 3 et 4.

La figure 2A montre un réseau bidimensionnel d'intensité GI à maillage hexagonal caractérisé par une maille élémentaire hexagonale de surface S. La figure 2B montre un réseau bidimensionnel de phase GP à maillage hexagonal caractérisé par une maille élémentaire hexagonale, de surface 3S. Le maillage, représenté en traits interrompus, n'est pas nécessairement visible dans le réseau final. Dans chaque maille de GI, un motif MOI est représenté qui introduit des variations d'intensité au faisceau lumineux incident. Dans chaque maille de GP, un motif MOP est représenté qui introduit des variations de phase au faisceau lumineux incident.

La figure 2C montre le positionnement relatif des mailles élémentaires des deux réseaux. Ce positionnement est essentiel pour le bon fonctionnement de l'invention. La surface de la maille élémentaire de phase MEP est égale à trois fois celle de la surface de la maille élémentaire d'intensité MEI. Afin de faciliter la description du positionnement relatif des mailles élémentaires hexagonales, une grande diagonale d'un hexagone est définie comme reliant deux sommets opposés, une petite diagonale est définie comme reliant deux sommets non adjacents et non opposés. La maille de phase MEP est centrée sur le sommet commun de trois mailles d'intensité MEI adjacentes. Les sommets d'une maille de phase MEP coïncident avec les sommets situés à l'une des extrémités des six petites diagonales de trois mailles d'intensité MEI adjacentes.

L'autre extrémité desdites petites diagonales est située au sommet commun desdites trois mailles d'intensité adjacentes, c'est-à-dire au centre de la maille de phase MEP.

Les figures 3 présentent des exemples de motifs élémentaires pour le réseau bidimensionnel d'intensité GI de la figure 2A permettant de réaliser la fonction d'intensité selon le procédé d'invention.

La figure 3A illustre un motif élémentaire MOI d'un réseau Gİ ayant une opacité continûment variable à maillage hexagonal MEİ de surface S. Les zones les plus claires, au centre du motif, sont celles où la transparence est la plus grande et les zones foncées, en périphérie, se caractérisent par une plus grande opacité. La zone de la sous-pupille peut ici être définie comme étant la zone où la transmission est supérieure à 33% de la valeur maximale de la transmission du réseau. Un moyen de caractériser ce réseau est de définir les profils de transmission sur une période T selon les directions d'une petite diagonale Pd et d'une médiane Me, et la période T' selon la direction d'une grande diagonale Gd de la maille d'intensité. Les valeurs correspondantes sont indiquées dans un tableau annexé en fin de description. Le réseau d'intensité GI obtenu à partir de ce motif élémentaire constitue le réseau d'intensité idéal. Il permet de réaliser un interféromètre présentant des qualités métrologiques équivalentes à celles obtenues avec le filtrage spatial décrit dans FR 2 712 978 mais dont la mise en oeuvre est beaucoup plus simple.

La figure 3B illustre un motif élémentaire MOI d'un réseau GI de type Ronchi à maillage hexagonal MEİ de surface S. Les zones noires sont de transmission nulle et les zones claires sont transparentes. Le motif élémentaire est constitué d'une zone centrale, transparente, hexagonale dont les sommets sont situés au milieu des cotés de l'hexagone de la maille d'intensité élémentaire, et de six triangles isocèles périphériques, opaques, dont les sommets sont les milieux de deux cotés adjacents et le sommet commun auxdits deux cotés.

Ainsi, la surface de transmission maximale de la sous-pupille est proche de 67% de la surface de la maille élémentaire. Le rendement lumineux est ainsi sensiblement amélioré par rapport aux masques d'intensité à mailles rectangulaires ou hexagonales, en particulier ceux proposés aux figures 8 de FR 2 712 978. Cette réalisation, moins coûteuse que la précédente, est particulièrement intéressante pour des applications courantes, en particulier en lumière polychromatique.

Les motifs élémentaires d'intensité sont tels qu'ils introduisent une variation de l'intensité du faisceau secondaire qui les traverse comprise entre une valeur maximale de 100 % au centre du motif hexagonal de surface S et une valeur minimale de 0% sur les sommets dudit motif.

La figure 4A montre en perspective un exemple de réseau bidimensionnel de phase GP qui offre un moyen simple de réaliser la fonction de phase selon le procédé de l'invention.

La figure 4B présente le même réseau GP, observé selon un axe perpendiculaire au plan du réseau, sur lequel le maillage élémentaire de surface 3S est représenté en trait pointillé noir. Le réseau GP du type damier présente des variations périodiques d'épaisseur par palier, de manière à ce que l'écart d'épaisseur e entre deux paliers adjacents suive la relation :

$$e = \lambda/(n-1) * (k+1/3)$$

où $\lambda$ est la longueur d'onde moyenne d'utilisation,

n est l'indice de réfraction du matériau dans le cas d'une utilisation du réseau de phase en transmission ou

et k est un entier.

Dans la figure 4B, on constate que le motif MOP en damiers hexagonaux du réseau de phase GP se superpose avec le maillage du réseau d'intensité. Les différents niveaux de gris des damiers du réseau GP de cette figure n'illustrent que les variations d'épaisseur des différents paliers du réseau, en aucun cas des variations de transmission entre ces paliers. Ce réseau est transparent en transmission.

Un moyen avantageux pour la réalisation des réseaux bidimensionnels GI et GP est d'utiliser les techniques de masquage et de gravure par photolithographie qui sont largement employées dans l'industrie des semi-conducteurs ; GÏ peut ainsi être réalisé par dépôt d'un masque métallique sur une lame de substrat et GP par gravure d'une lame de substrat. Avec ces techniques, il est possible de réaliser avec une seule lame de substrat un réseau bidimensionnel de phase et d'intensité qui combine les deux fonctions Fİ et FP de respectivement GI et GP.

De plus, les récents progrès en photolithographie permettent d'envisager le codage en niveaux de gris de la fonction d'intensité. Ces différents niveaux de gris peuvent être obtenus en codant différentes épaisseurs de masque métallique ou en le perçant de petites ouvertures de taille inférieure à la longueur d'onde moyenne d'analyse.

D'autres procédés de réalisation des deux fonctions Fİ et FP par des réseaux Gİ et GP peuvent être envisagés basés, par exemple, sur le principe d'enregistrement sur des plaques photosensibles d'interférogrammes pour ainsi aboutir à la réalisation de réseaux holographiques. De même, la description de l'invention a été faite dans le cadre de réseaux fonctionnant en transmission. L'homme de l'art est à même d'appliquer l'invention à des réseaux fonctionnant en réflexion.

La superposition des réseaux GI et GP permet de réaliser des réseaux bidimensionnels GR. La figure 5A présente le réseau GR1 obtenu en superposant le réseau d'intensité ayant le motif de la figure 3A et le réseau de phase de la figure 4B. La figure 5B présente le réseau GR2 obtenu en superposant le réseau d'intensité ayant le motif de la figure 3B et le réseau de phase de la figure 4B. Pour interpréter correctement la figure 5A, il faut tenir compte de l'effet lié aux différents niveaux de gris des damiers du réseau GP se superposant à celui lié au réseau GI. Pour la figure 5B, l'interprétation est plus simple, les triangles noirs représentent les parties opaques du réseau GI, les hexagones blancs et gris représentant les différentes épaisseurs des paliers du réseau GP.

La combinaison des réseaux GI et GP permet de générer un maillage de taches lumineuses dont le contraste est sensiblement indépendant de la distance d'observation d et de la longueur d'onde d'utilisation. Du fait des brusques variations d'intensité introduites par le réseau d'intensité GI du type de Ronchi dont le motif élémentaire est représenté sur la figure 3B, des fluctuations de contrastes apparaissent au cours de la propagation qui se traduisent par des déformations locales hautes fréquences des taches lumineuses. Ces déformations parasites restent mineures par rapport à la modulation sinusoïdale d'intensité observée dans les deux directions et ne perturbent pas l'analyse de la surface d'onde. Un moyen de réduire ces fluctuations mineures dues à l'énergie résiduelle diffractée dans les sous-faisceaux secondaires est de coder la fonction d'intensité au moyen d'un réseau d'intensité dont la transmission est continûment variable entre 100%, au centre de la maille de surface S et 0%, sur les bords, selon une surface d'apodisation du type fenêtre de Hanning couramment rencontrée en traitement numérique des signaux.

Dans la demande de brevet FR 2 682 761, le demandeur a proposé une technique d'acquisition et d'analyse des images d'interférence obtenues, afin d'accéder aux gradients de la surface d'onde au moyen d'une unité de traitement UT. Ces techniques sont directement applicables aux maillages de taches lumineuses obtenus selon la présente invention.

Annexe :

Tableau des valeurs d'indice de transmission

| Abscisse sur une période | Indice grande diagonale Gd | Indice petite diagonale Pd | Indice médiane Me |
|---|---|---|---|
| 1 | 0.000 | 0.000 | 0.327 |
| 2 | 0.069 | 0.052 | 0.334 |
| 3 | 0.147 | 0.091 | 0.352 |
| 4 | 0.230 | 0.131 | 0.378 |
| 5 | 0.314 | 0.171 | 0.411 |
| 6 | 0.399 | 0.210 | 0.448 |
| 7 | 0.483 | 0.249 | 0.488 |
| 8 | 0.564 | 0.286 | 0.530 |
| 9 | 0.642 | 0.323 | 0.573 |
| 10 | 0.714 | 0.358 | 0.616 |
| 11 | 0.781 | 0.391 | 0.658 |
| 12 | 0.840 | 0.423 | 0.699 |
| 13 | 0.891 | 0.454 | 0.739 |
| 14 | 0.933 | 0.482 | 0.776 |
| 15 | 0.965 | 0.509 | 0.811 |
| 16 | 0.987 | 0.533 | 0.844 |
| 17 | 0.998 | 0.556 | 0.875 |
| 18 | 1.000 | 0.576 | 0.902 |
| 19 | 0.988 | 0.593 | 0.926 |
| 20 | 0.967 | 0.609 | 0.947 |

(suite)

| Abscisse sur une période | Indice grande diagonale Gd | Indice petite diagonale Pd | Indice médiane Me |
|---|---|---|---|
| 21 | 0.935 | 0.622 | 0.965 |
| 22 | 0.893 | 0.632 | 0.979 |
| 23 | 0.843 | 0.640 | 0.990 |
| 24 | 0.784 | 0.645 | 0.997 |
| 25 | 0.718 | 0.647 | 1.000 |
| 26 | 0.646 | 0.647 | 1.000 |
| 27 | 0.568 | 0.645 | 0.996 |
| 28 | 0.487 | 0.639 | 0.989 |
| 29 | 0.403 | 0.631 | 0.978 |
| 30 | 0.318 | 0.621 | 0.964 |
| 31 | 0.234 | 0.608 | 0.946 |
| 32 | 0.151 | 0.592 | 0.924 |
| 33 | 0.073 | 0.574 | 0.900 |
| 34 | 0.000 | 0.554 | 0.873 |
| 35 | 0.079 | 0.532 | 0.842 |
| 36 | 0.141 | 0.507 | 0.809 |
| 37 | 0.197 | 0.480 | 0.774 |
| 38 | 0.244 | 0.452 | 0.736 |
| 39 | 0.282 | 0.421 | 0.696 |
| 40 | 0.310 | 0.389 | 0.655 |
| 41 | 0.327 | 0.355 | 0.613 |
| 42 | 0.334 | 0.320 | 0.570 |
| 43 | 0.330 | 0.284 | 0.527 |
| 44 | 0.315 | 0.246 | 0.485 |
| 45 | 0.290 | 0.208 | 0.445 |
| 46 | 0.254 | 0.168 | 0.408 |
| 47 | 0.209 | 0.129 | 0.376 |
| 48 | 0.156 | 0.088 | 0.350 |
| 49 | 0.086 | 0.049 | 0.334 |
| 50 | 0.000 | 0.000 | 0.327 |

**Revendications**

1. Procédé pour l'analyse de surface d'onde d'un faisceau de lumière, dans lequel :

a) on place un réseau de diffraction à maillage bidimensionnel, effectuant la multiplication d'
a1) une fonction d'intensité (FI) qui définit un maillage hexagonal de sous-pupilles transmettant la lumière du faisceau à analyser en plusieurs faisceaux secondaires disposés suivant un maillage hexagonal, avec
a2) une fonction de phase (FP),
dans un plan ($P_C$) perpendiculaire au faisceau de lumière à analyser et optiquement conjugué du plan ($P_D$) d'analyse de la surface d'onde, ce qui provoque une diffraction du faisceau en différents faisceaux émergents, et

b) on crée et on observe dans un plan (P$_S$) situé à distance choisie du plan (P$_C$) une image formée par l'interférence des faisceaux émergents, image dont les déformations sont liées aux gradients de la surface d'onde analysée,

**caractérisé en ce que**

dans a2), ladite fonction de phase (FP) est réalisée par un réseau bidimensionnel de phase (GP) qui présente un motif en damier se superposant avec le maillage d'intensité et présentant des variations périodiques d'épaisseur e entre deux paliers adjacents suivant la relation :

$$e \,=\, \lambda/(n-1) \,\star\,(k+1/3)$$

où $\lambda$ est la longueur d'onde moyenne d'utilisation,
n est l'indice de réfraction du matériau ,

et k est un entier, ladite fonction de phase (FP) introduisant un déphasage de $\dfrac{2\pi}{3}$ modulo $2\pi$ entre deux

faisceaux secondaires adjacents.

2. Dispositif pour l'analyse de la surface d'onde d'un faisceau de lumière, comprenant :

$\alpha$) une optique d'entrée (O$_2$, O$_3$, O$_4$), conjuguant optiquement un plan de référence (P$_C$) avec le plan (P$_D$) dans lequel est analysée la surface d'onde,
$\beta$) un réseau de diffraction (GR), comprenant un réseau d'intensité (Gİ) à maille élémentaire hexagonale (MEI) et un réseau de phase (GP) à maille élémentaire hexagonale (MEP), placé dans le plan de référence (P$_C$), ce qui provoque une diffraction du faisceau en différents faisceaux émergents, appelés faisceaux secondaires, et
$\gamma$) des moyens d'observation de l'image formée par l'interférence des faisceaux émergents, image dont les déformations sont liées au gradient de la surface d'onde analysée,
**caractérisé en ce que** dans le réseau de $\beta$)

- le réseau d'intensité (Gİ) a une maille élémentaire (MEI) de surface S, maille où est disposé un motif élémentaire d'intensité de surface S, et
- le réseau de phase (GP) a une maille élémentaire (MEP) de surface égale à 3 fois la surface S (3S), maille où est disposé un motif élémentaire de phase dont la surface est égale à trois fois la surface S,

les six sommets d'une maille de phase coïncidant avec les sommets situés à l'une des extrémités des six petites diagonales de trois mailles d'intensité adjacentes, l'autre extrémité desdites petites diagonales étant située au sommet commun desdites trois mailles d'intensité adjacentes,
le motif élémentaire d'intensité étant tel qu'il introduit une variation de l'intensité du faisceau secondaire qui le traverse entre une valeur maximale de 100 % au centre du motif élémentaire de surface S et une valeur minimale de 0% sur les sommets du motif, et
le motif élémentaire de phase présentant un motif en damier se superposant avec le maillage d'intensité et présentant des variations périodiques d'épaisseur e entre deux paliers adjacents suivant la relation :

$$e \,=\, \lambda/(n-1) \,\star\,(k+1/3)$$

où $\lambda$ est la longueur d'onde moyenne d'utilisation,
n est l'indice de réfraction du matériau,
et k est un entier,
introduisant un déphasage voisin de $2\pi/3$ (modulo $2\pi$) entre deux faisceaux secondaires traversant deux motifs élémentaires d'intensité adjacents.

3. Dispositif selon la revendication 2 **caractérisé en ce que** le motif élémentaire (MOİ) du réseau de phase (GP) présente des profils de transmission sur une période T selon les directions d'une petite diagonale (Pd) et d'une médiane (Me), et la période T' selon la direction d'une grande diagonale (Gd) de la maille d'intensité dont les valeurs d'indice sont les suivantes :

| Abscisse sur une période | Indice grande diagonale Gd | Indice petite diagonale Pd | Indice médiane Me |
|---|---|---|---|
| 1 | 0.000 | 0.000 | 0.327 |
| 2 | 0.069 | 0.052 | 0.334 |
| 3 | 0.147 | 0.091 | 0.352 |
| 4 | 0.230 | 0.131 | 0.378 |
| 5 | 0.314 | 0.171 | 0.411 |
| 6 | 0.399 | 0.210 | 0.448 |
| 7 | 0.483 | 0.249 | 0.488 |
| 8 | 0.564 | 0.286 | 0.530 |
| 9 | 0.642 | 0.323 | 0.573 |
| 10 | 0.714 | 0.358 | 0.616 |
| 11 | 0.781 | 0.391 | 0.658 |
| 12 | 0.840 | 0.423 | 0.699 |
| 13 | 0.891 | 0.454 | 0.739 |
| 14 | 0.933 | 0.482 | 0.776 |
| 15 | 0.965 | 0.509 | 0.811 |
| 16 | 0.987 | 0.533 | 0.844 |
| 17 | 0.998 | 0.556 | 0.875 |
| 18 | 1.000 | 0.576 | 0.902 |
| 19 | 0.988 | 0.593 | 0.926 |
| 20 | 0.967 | 0.609 | 0.947 |
| 21 | 0.935 | 0.622 | 0.965 |
| 22 | 0.893 | 0.632 | 0.979 |
| 23 | 0.843 | 0.640 | 0.990 |
| 24 | 0.784 | 0.645 | 0.997 |
| 25 | 0.718 | 0.647 | 1.000 |
| 26 | 0.646 | 0.647 | 1.000 |
| 27 | 0.568 | 0.645 | 0.996 |
| 28 | 0.487 | 0.639 | 0.989 |
| 29 | 0.403 | 0.631 | 0.978 |
| 30 | 0.318 | 0.621 | 0.964 |
| 31 | 0.234 | 0.608 | 0.946 |
| 32 | 0.151 | 0.592 | 0.924 |
| 33 | 0.073 | 0.574 | 0.900 |
| 34 | 0.000 | 0.554 | 0.873 |
| 35 | 0.079 | 0.532 | 0.842 |
| 36 | 0.141 | 0.507 | 0.809 |
| 37 | 0.197 | 0.480 | 0.774 |

(suite)

| Abscisse sur une période | Indice grande diagonale Gd | Indice petite diagonale Pd | Indice médiane Me |
|---|---|---|---|
| 38 | 0.244 | 0.452 | 0.736 |
| 39 | 0.282 | 0.421 | 0.696 |
| 40 | 0.310 | 0.389 | 0.655 |
| 41 | 0.327 | 0.355 | 0.613 |
| 42 | 0.334 | 0.320 | 0.570 |
| 43 | 0.330 | 0.284 | 0.527 |
| 44 | 0.315 | 0.246 | 0.485 |
| 45 | 0.290 | 0.208 | 0.445 |
| 46 | 0.254 | 0.168 | 0.408 |
| 47 | 0.209 | 0.129 | 0.376 |
| 48 | 0.156 | 0.088 | 0.350 |
| 49 | 0.086 | 0.049 | 0.334 |
| 50 | 0.000 | 0.000 | 0.327 |

**4.** Dispositif selon la revendication 2 **caractérisé en ce que** le motif élémentaire est constitué d'une zone centrale transparente hexagonale dont les sommets sont situés au milieu des cotés de l'hexagone de la maille d'intensité élémentaire, et de six triangles isocèles périphériques opaques dont les sommets sont les milieux de deux cotés adjacents de l'hexagone de la maille d'intensité élémentaire et le sommet commun auxdits deux cotés adjacents.

**Claims**

**1.** A method of analyzing the wavefront of a light beam, comprising:

a) arranging a diffraction grating with two-dimensional meshing carrying out the multiplication of:

a1) an intensity function (FI) which defines a hexagonal meshing of sub-pupils transmitting the light from the beam to be analyzed into a plurality of secondary beams arranged in a hexagonal meshing, by
a2) a phase function (FP),
inside or in the vicinity of a plane ($P_C$) perpendicular to the light beam to be analyzed and optically conjugated to the analysis plane ($P_D$) of the wavefront, resulting in a diffraction of the beam into different emerging beams, and

b) creating and observing an image formed by the interference of the emerging beams in a plane ($P_S$) located at a chosen distance from the plane ($P_C$), said image having deformations linked to the gradients of the wavefront to be analyzed, **characterized in that**
in a2), said phase function (FP) is a two-dimensional phase grating (GP) that has a checkerboard pattern overlapping the intensity meshing and having periodic variations of thickness e between two adjacent steps satisfying the equation:

$$e = \lambda/(n-1) \times (k+1/3)$$

where $\lambda$ is the mean operating wavelength,
n is the refractive index of the material, and
k is an integer,
said phase function (FP) introducing a phase shift of $2\pi/3$ (modulo $2\pi$) between two adjacent secondary beams.

2. A system for analyzing the wavefront of a light beam, including:

α) an input optics ($O_2$, $O_3$, $O_4$) optically conjugating a reference plane ($P_C$) with a plane ($P_D$) wherein the wavefront is analyzed,
β) a diffraction grating (GR) comprising an intensity grating (Gİ) with a hexagonal elementary mesh (MEI) and a phase grating (GP) with a hexagonal elementary mesh (MEP), and arranged in the reference plane ($P_C$), resulting in a diffraction of the beam in different emerging beams referred to as secondary beams, and
γ) means for observing the image formed by the interference of the emerging beams, said image having deformations linked to the gradient of the analyzed wavefront,
**characterized in that** in the grating of β):

- the intensity grating (GI) has an elementary mesh (MEI) with a surface S where there is arranged an elementary intensity pattern with a surface S, and
- the phase grating (GP) has an elementary mesh (MEP) with a surface equal to three times the surface S (3S), where there is arranged an elementary phase pattern having a surface equal to three times the surface S,

all six apexes of a phase mesh matching with the apexes located at one of the ends of the six small diagonals of three adjacent intensity meshes, the other end of said small diagonals being located at the common apex of said three adjacent intensity meshes,
the elementary intensity pattern being such that it introduces a variation of intensity from a secondary beam crossing it between a maximum value of 100% at the centre of the elementary pattern of surface S and a minimum value of 0% on the apexes of the pattern, and
the elementary phase pattern having a checkerboard pattern overlapping the intensity meshing and having periodic variations of thickness e between two adjacent steps satisfying the equation:

$$e = \lambda/(n-1) \times (k+1/3)$$

where $\lambda$ is the mean operating wavelength,
n is the refractive index of the material, and
k is an integer,
introducing a phase shift of $2\pi/3$ (modulo $2\pi$) between two secondary beams crossing two adjacent elementary intensity patterns.

3. A system according to claim 2, **characterized in that** the elementary phase pattern (MOI) of the phase grating (GP) has transmission profiles over a period T along the directions of a small diagonal (Pd) and a median (Me), and the period T' along the direction of a large diagonal (Gd) of the intensity mesh whose index values are the following ones:

| Abscissa over a period | Large diagonal index Gd | Small diagonal index Pd | Median index Me |
|---|---|---|---|
| 1 | 0.000 | 0.000 | 0.327 |
| 2 | 0.069 | 0.052 | 0.334 |
| 3 | 0.147 | 0.091 | 0.352 |
| 4 | 0.230 | 0.131 | 0.378 |
| 5 | 0.314 | 0.171 | 0.411 |
| 6 | 0.399 | 0.210 | 0.448 |
| 7 | 0.483 | 0.249 | 0.488 |
| 8 | 0.564 | 0.286 | 0.530 |
| 9 | 0.642 | 0.323 | 0.573 |
| 10 | 0.714 | 0.358 | 0.616 |
| 11 | 0.781 | 0.391 | 0.658 |

(continued)

| Abscissa over a period | Large diagonal index Gd | Small diagonal index Pd | Median index Me |
|---|---|---|---|
| 12 | 0.840 | 0.423 | 0.699 |
| 13 | 0.891 | 0.454 | 0.739 |
| 14 | 0.933 | 0.482 | 0.776 |
| 15 | 0.965 | 0.509 | 0.811 |
| 16 | 0.987 | 0.533 | 0.844 |
| 17 | 0.998 | 0.556 | 0.875 |
| 18 | 1.000 | 0.576 | 0.902 |
| 19 | 0.988 | 0.593 | 0.926 |
| 20 | 0.967 | 0.609 | 0.947 |
| 21 | 0.935 | 0.622 | 0.965 |
| 22 | 0.893 | 0.632 | 0.979 |
| 23 | 0.843 | 0.640 | 0.990 |
| 24 | 0.784 | 0.645 | 0.997 |
| 25 | 0.718 | 0.647 | 1.000 |
| 26 | 0.646 | 0.647 | 1.000 |
| 27 | 0.568 | 0.645 | 0.996 |
| 28 | 0.487 | 0.639 | 0.989 |
| 29 | 0.403 | 0.631 | 0.978 |
| 30 | 0.318 | 0.621 | 0.964 |
| 31 | 0.234 | 0.608 | 0.946 |
| 32 | 0.151 | 0.592 | 0.924 |
| 33 | 0.073 | 0.574 | 0.900 |
| 34 | 0.000 | 0.554 | 0.873 |
| 35 | 0.079 | 0.532 | 0.842 |
| 36 | 0.141 | 0.507 | 0.809 |
| 37 | 0.197 | 0.480 | 0.774 |
| 38 | 0.244 | 0.452 | 0.736 |
| 39 | 0.282 | 0.421 | 0.696 |
| 40 | 0.310 | 0.389 | 0.655 |
| 41 | 0.327 | 0.355 | 0.613 |
| 42 | 0.334 | 0.320 | 0.570 |
| 43 | 0.330 | 0.284 | 0.527 |
| 44 | 0.315 | 0.246 | 0.485 |
| 45 | 0.290 | 0.208 | 0.445 |
| 46 | 0.254 | 0.168 | 0.408 |
| 47 | 0.209 | 0.129 | 0.376 |
| 48 | 0.156 | 0.088 | 0.350 |
| 49 | 0.086 | 0.049 | 0.334 |

EP 1 974 194 B1

(continued)

| Abscissa over a period | Large diagonal index Gd | Small diagonal index Pd | Median index Me |
|---|---|---|---|
| 50 | 0.000 | 0.000 | 0.327 |

4. A system according to claim 2, **characterized in that** the elementary pattern comprises a central transparent hexagonal area whose apexes are located at the middle of the sides of the hexagon of the elementary intensity mesh, and six opaque peripheral isosceles triangles whose apexes are the centres of two adjacent sides of the hexagon of the elementary intensity mesh and the common apex for said two adjacent sides.

**Patentansprüche**

1. Verfahren für die Analyse der Wellenfront eines Lichtstrahls, bei dem:

   a) ein Beugungsgitter mit zweidimensionalem Gitternetz, das die Vervielfachung
   a1) einer Intensitätsfunktion (Fi), die ein sechseckiges Gitternetz von Teilpupillen festlegt, die das Licht des zu analysierenden Strahls in mehrere Sekundärstrahlen, die in einem sechseckigen Gitternetz angeordnet sind, übertragen, mit
   a2) einer Phasenfunktion (FP) durchführt,
   in einer Ebene ($P_C$) senkrecht zu dem zu analysierenden Lichtstrahl und optisch der Analyseebene ($P_D$) der Wellenfront zugeordnet angeordnet wird, was eine Beugung des Strahls in verschiedene ausfallende Strahlen bewirkt, und
   b) in einer Ebene ($P_S$), die sich in einem gewählten Abstand zu der Ebene ($P_C$) befindet, ein Bild erzeugt und betrachtet wird, das durch die Interferenz der ausfallenden Strahlen gebildet wird und dessen Verzerrungen mit den Gradienten der analysierten Wellenfront zusammenhängen,
   **dadurch gekennzeichnet, dass**
   in Schritt a2) die Phasenfunktion (FP) durch ein zweidimensionales Phasengitter (GP) durchgeführt wird, das ein Schachbrettmuster aufweist, das sich mit dem Intensitätsgitternetz überlagert und periodische Veränderungen der Dicke e zwischen zwei benachbarten Stufen gemäß der folgenden Beziehung aufweist:

   $$e = \lambda / (n-1) * (k+1/3)$$

   wobei $\lambda$ die mittlere Nutzwellenlänge ist,
   n der Beugungsindex des Materials ist,
   und k eine ganze Zahl ist, wobei die Phasenfunktion (FP) eine Phasenverschiebung von $2\Pi/3$ modulo $2\Pi$ zwischen zwei benachbarten Sekundärstrahlen einführt.

2. Vorrichtung für die Analyse der Wellenfront eines Lichtstrahls, umfassend:

   $\alpha$) eine Eingangsoptik ($O_2$, $O_3$, $O_4$), die eine optische Zuordnung einer Referenzebene ($P_C$) mit der Ebene ($P_D$) herstellt, in der die Wellenfront analysiert wird,
   $\beta$) ein Beugungsgitter (GR), umfassend ein Intensitätsgitter (Gi) mit sechseckiger Elementarzelle (MEI) und einem Phasengitter (GP) mit sechseckiger Elementarzelle (MEP), das in der Referenzebene ($P_C$) angeordnet ist, was eine Beugung des Strahls in verschiedene ausfallende Strahlen bewirkt, die Sekundärstrahlen genannt werden, und
   $\gamma$) Mittel zum Betrachten des Bildes, das durch die Interferenz der ausfallenden Strahlen gebildet wird und dessen Verzerrungen mit dem Gradienten der analysierten Wellenfront zusammenhängen,
   **dadurch gekennzeichnet, dass** in dem Gitter von $\beta$)

   - das Intensitätsgitter (Gi) eine Elementarzelle (MEI) mit einer Fläche S hat, wobei in der Zelle ein elementares Intensitätsmuster mit einer Fläche S angeordnet ist, und
   - das Phasengitter (GP) eine Elementarzelle (MEP) mit einer Fläche hat, die gleich dem 3-Fachen der Fläche S (3S) ist, wobei in der Zelle ein elementares Phasenmuster angeordnet ist, dessen Fläche gleich dem Dreifachen der Fläche S ist,

wobei die sechs Spitzen einer Phasenzelle mit den Spitzen zusammenfallen, die sich an einem der Enden der sechs kleinen Diagonalen von drei benachbarten Intensitätszellen befinden, wobei sich das andere Ende der kleinen Diagonalen an der Spitze befindet, die den drei benachbarten Intensitätszellen gemeinsam ist, wobei das elementare Intensitätsmuster dergestalt ist, dass es eine Veränderung der Intensität des Sekundärstrahls einführt, der es zwischen einem Höchstwert von 100% in der Mitte des elementaren Musters mit der Fläche S und einem Mindestwert von 0% an den Spitzen des Musters durchsetzt, und wobei das elementare Phasenmuster ein Schachbrettmuster aufweist, das sich mit dem Intensitätsgitternetz überlagert und periodische Veränderungen der Dicke e zwischen zwei benachbarten Stufen gemäß der folgenden Beziehung aufweist:

$$e = \lambda / (n-1) * (k+1/3)$$

wobei λ die mittlere Nutzwellenlänge ist,
n der Beugungsindex des Materials ist,
und k eine ganze Zahl ist, wobei eine Phasenverschiebung nahe 2Π/3 (modulo 2Π) zwischen zwei benachbarten Sekundärstrahlen, die zwei benachbarte elementare Intensitätsmuster durchsetzen, eingeführt wird.

3.  Vorrichtung nach Anspruch 2, **dadurch gekennzeichnet, dass** das elementare Muster (MOl) des Phasengitters (GP) Übertragungsprofile über eine Periode T in den Richtungen einer kleinen Diagonale (Pd) und einer Mediane (Me) und die Periode T' in der Richtung einer großen Diagonale (Gd) der Intensitätszelle aufweist, deren Indexwerte folgendermaßen sind:

| Abszisse über eine Periode | Index große Diagonale Gd | Index kleine Diagonale Pd | Index Mediane Me |
|---|---|---|---|
| 1 | 0,000 | 0,000 | 0,327 |
| 2 | 0,069 | 0,052 | 0,334 |
| 3 | 0,147 | 0,091 | 0,352 |
| 4 | 0,230 | 0,131 | 0,378 |
| 5 | 0,314 | 0,171 | 0,411 |
| 6 | 0,399 | 0,210 | 0,448 |
| 7 | 0,483 | 0,249 | 0,488 |
| 8 | 0,564 | 0,286 | 0,530 |
| 9 | 0,642 | 0,323 | 0,573 |
| 10 | 0,714 | 0,358 | 0,616 |
| 11 | 0,781 | 0,391 | 0,658 |
| 12 | 0,840 | 0,423 | 0,699 |
| 13 | 0,891 | 0,454 | 0,739 |
| 14 | 0,933 | 0,482 | 0,776 |
| 15 | 0,965 | 0,509 | 0,811 |
| 16 | 0,987 | 0,533 | 0,844 |
| 17 | 0,998 | 0,556 | 0,875 |
| 18 | 1,000 | 0,576 | 0,902 |
| 19 | 0,988 | 0,593 | 0,926 |
| 20 | 0,967 | 0,609 | 0,947 |
| 21 | 0,935 | 0,622 | 0,965 |
| 22 | 0,893 | 0,632 | 0,979 |

(fortgesetzt)

| Abszisse über eine Periode | Index große Diagonale Gd | Index kleine Diagonale Pd | Index Mediane Me |
|---|---|---|---|
| 23 | 0,843 | 0,640 | 0,990 |
| 24 | 0,784 | 0,645 | 0,997 |
| 25 | 0,718 | 0,647 | 1,000 |
| 26 | 0,646 | 0,647 | 1,000 |
| 27 | 0,568 | 0,645 | 0,996 |
| 28 | 0,487 | 0,639 | 0,989 |
| 29 | 0,403 | 0,631 | 0,978 |
| 30 | 0,318 | 0,621 | 0,964 |
| 31 | 0,234 | 0,608 | 0,946 |
| 32 | 0,151 | 0,592 | 0,924 |
| 33 | 0,073 | 0,574 | 0,900 |
| 34 | 0,000 | 0,554 | 0,873 |
| 35 | 0,079 | 0,532 | 0,842 |
| 36 | 0,141 | 0,507 | 0,809 |
| 37 | 0,197 | 0,480 | 0,774 |
| 38 | 0,244 | 0,452 | 0,736 |
| 39 | 0,282 | 0,421 | 0,696 |
| 40 | 0,310 | 0,389 | 0,655 |
| 41 | 0,327 | 0,355 | 0,613 |
| 42 | 0,334 | 0,320 | 0,570 |
| 43 | 0,330 | 0,284 | 0,527 |
| 44 | 0,315 | 0,246 | 0,485 |
| 45 | 0,290 | 0,208 | 0,445 |
| 46 | 0,254 | 0,168 | 0,408 |
| 47 | 0,209 | 0,129 | 0,376 |
| 48 | 0,156 | 0,088 | 0,350 |
| 49 | 0,086 | 0,049 | 0,334 |
| 50 | 0,000 | 0,000 | 0,327 |

4. Vorrichtung nach Anspruch 2, **dadurch gekennzeichnet, dass** das elementare Muster von einer sechseckigen durchsichtigen mittleren Zone, deren Spitzen sich in der Mitte der Seiten des Sechsecks der elementaren Intensitätszelle befinden, und von sechs undurchsichtigen umlaufenden gleichschenkligen Dreiecken gebildet ist, deren Spitzen die Mitten von zwei benachbarten Seiten des Sechsecks der elementaren Intensitätszelle und die Spitze, die zwei benachbarten Seiten gemeinsam ist, sind.

Fig. 1A

Fig. 1B

MOİ — S

MEİ

MEP

Fig. 2A

Fig. 2C

MOP — 3S

GP

MEP

Fig. 2B

Gİ

MEİ

MOİ

Pd

Me

Gd

MEİ

Fig.3A

MOİ

MEİ

Fig.3B

GP

↕e

Ce

**Fig.4A**

MEP

MOP

GP

**Fig.4B**

**EP 1 974 194 B1**

**RÉFÉRENCES CITÉES DANS LA DESCRIPTION**

**Documents brevets cités dans la description**

- FR 2712978
- FR 2795175
- FR 2682761